Europäisches Patentamt

European Patent Office

Office européen des brevets

(19)

(11) Veröffentlichungsnummer: **0 103 930**
**B1**

(12) # EUROPÄISCHE PATENTSCHRIFT

(45) Veröffentlichungstag der Patentschrift:
**19.04.89**

(21) Anmeldenummer: **83201311.4**

(22) Anmeldetag: **13.09.83**

(51) Int. Cl.⁴: **H 02 P 1/46**, H 02 P 7/00,
H 02 K 7/118, H 02 K 7/00

(54) Umkehrvorrichtung für einen zweipoligen Einphasensynchronmotor.

(30) Priorität: **18.09.82 DE 3234717**

(43) Veröffentlichungstag der Anmeldung:
**28.03.84 Patentblatt 84/13**

(45) Bekanntmachung des Hinweises auf die Patenterteilung:
**19.04.89 Patentblatt 89/16**

(84) Benannte Vertragsstaaten:
**AT DE FR GB IT**

(56) Entgegenhaltungen:
**DE-A-2 919 604**
**DE-C-589 319**
**DE-C-974 260**
**GB-A-2 083 714**

(73) Patentinhaber: **Philips Patentverwaltung GmbH,
Wendenstrasse 35 Postfach 10 51 49, D-2000
Hamburg 1 (DE)**

(84) Benannte Vertragsstaaten: **DE**

(73) Patentinhaber: **N.V. Philips' Gloeilampenfabrieken,
Groenewoudseweg 1, NL- 5621 BA Eindhoven (NL)**

(84) Benannte Vertragsstaaten: **FR GB IT AT**

(72) Erfinder: **Diefenbach, Gerhard, Schulstrasse 19,
D-5100 Aachen (DE)**
Erfinder: **Krainer, Erich, Martin- Rom- Strasse 42,
A-9300 St. Veit an der Glaan (AT)**

(74) Vertreter: **Kupfermann, Fritz- Joachim, Dipl.- Ing.,
Philips Patentverwaltung GmbH Wendenstrasse
35 Postfach 10 51 49, D-2000 Hamburg 1 (DE)**

EP 0 103 930 B1

### Beschreibung

Die Erfindung bezieht sich auf eine Umkehrvorrichtung für einen zweipoligen Einphasensynchronmotor ohne Anlauf-Hilfswicklung mit einem diametral magnetisierten dauermagnetischen Läufer, dessen Welle zur Drehrichtungsumkehr gegen Anschläge aufläuft und mit einem in Reihe mit der Ständererregerwicklung geschalteten Kondensator.

Es gibt eine Reihe von Maschinen und Geräten, bei denen die Bewegungsrichtung automatisch in regelmäßigen oder unregelmäßigen Zeitabständen umkehrt bzw. umkehren soll. So ist eine kleine Zitruspresse bekannt (AT-PS-355 752), bei der jeweils nach etwa einer dreiviertel Umdrehung der Preßkegel die Drehrichtung ändert. Das Preßergebnis wird dadurch verbessert.

Ein Einphasen-Synchronmotor mit dauermagnetischem Läufer hat die Eigenschaft, statistisch in beiden Richtungen anlaufen und laufen zu können. Aufgrund des großen Übersetzungsverhältnisses beim Einsatz in einer Zitruspresse muß der Motor bei der beschriebenen Preßkegelbewegung von jeweils etwa einer dreiviertel Umdrehung eine Vielzahl von Umdrehungen ausführen, also jeweils in den eingeschwungenen Zustand kommen und eingeschwungen laufen. Um das Umkehren des Preßkegels und des Motors zu bewirken, können mehr oder weniger elastische Anschläge vorgesehen werden, gegen die das den Preßkegel antreibende Zahnrad abwechselnd in positiver und negativer Drehrichtung anläuft, wobei der Motor zur Drehrichtungsumkehr derart überlastet wird, daß er abkippt und dann in der entgegengesetzten Richtung wieder anläuft. Es ist erwünscht, daß das Abkippen und Anlaufen in der anderen Drehrichtung schnell erfolgt und die dem Einphasensynchronmotor eigenen Anlaufschwierigkeiten, bei denen die Drehrichtung unter Umständen mehrfach wechseln kann, nicht auftreten. Dies würde nämlich zu einer deutlich wahrnehmbaren Fehlfunktion (einem sogenannten Hapern) des Preßkegels führen mit unregelmäßigen, ruckartigen Bewegungen (einem Stottern) und begleitender Geräuschentwicklung.

Aus der DE-C-974 260 ist es bekannt, zur Verbesserung der Arbeitsweise von mit schwankender Drehzahl angetriebenen Wechselstromgeneratoren im Generatorbetrieb einen in Reihe mit der Ankerinduktivität geschalteten Kondensator so zu dimensionieren, daß sein Einfluß bei niedrigen Drehzahlen groß und bei hohen Drehzahlen sehr klein ist, um den Strom im Verbraucher bis zu tiefen Drehzahlen annähernd konstant zu halten.

Aus der DE-C-589 319 ist es bekannt, einen Drehrichtungswechsel über mechanische Anschläge zu bewirken. Wegen der vielpoligen Anwendung und der damit verbundenen niedrigen Betriebsdrehzahl ist die Anlaufproblematik unbedeutend. Für das Reversieren genügt deshalb offensichtlich die mechanische Reversier-Federvorrichtung.

Es ist Aufgabe der Erfindung, eine Umkehrvorrichtung zu schaffen, bei der das Umkehren zuverlässig und ohne Stottern erfolgt, der ungestörte Zustand also schnell und problemlos erreicht wird.

Die gestellte Aufgabe wird erfindungsgemäß dadurch gelöst, daß der Blindwiderstand des Kondensators bei Netzfrequenz größer ist als der Blindwiderstand der Erregerwicklung, womit die Kondensatorwerte der Dimensionierungsvorschrift:

$$\frac{\omega L - \dfrac{1}{\omega C}}{R} < 0,$$

folgen, derart, daß der Betriebsstrom der Erregerwicklung mit Kondensator etwa den gleichen Effektivwert aufweist, der dem Effektivwert des Betriebsstromes ohne vorgeschalteten Kondensator entspricht, da die Motorerwärmung dann gleich ist.

Dies bedeutet, daß der Kondensator so bemessen ist, daß der aus Kondensator, Spuleninduktivität und Spulenwiderstand bestehende Reihenschwingkreis stark kapazitiv wird. Der Preßkegel einer Zitruspresse kehrt nun einwandfrei um. Die von Einphasensynchronmotoren bekannten Stabilitätsprobleme (DE-PS-2 612 851) treten nicht auf. Der ungestörte Zustand wird schnell und problemlos erreicht.

Es ist bekannt, daß das Anlaufverhalten und die Stabilität der Bewegung von Einphasensynchronmotoren verbessert werden können durch Vergrößerung des ohmschen Widerstandes (Philips Research Reports Supp. 1971, No. 5, S. 98), evtl. durch Verwendung eines Vorwiderstandes (DE-PS-2 612 851).

In der DE-PS-2 612 851 wird während der Anlaufphase u. a. ein Vorwiderstand zugeschaltet, um die 33 1/3 Hz-Störung (und damit auch das sich anschließende Gebiet der Anlaufstörungen mit Drehrichtungsumkehr) unschädlich zu machen (Spalte 3, Zeilen 12 bis 18), und ganz allgemein die subharmonischen Resonanzen aus dem Betriebsbereich zu verschieben bzw., wie im Falle der 25 Hz-Resonanz und der zugehörigen Pendelgebiete, durch eine weitere Erhöhunq des Vorwiderstandes diese völlig abzudämpfen. Die eigentliche Anlaufbewegung mit zugehörigem Abkippen wird in dieser Patentschrift nicht betrachtet. Der Vorwiderstand in der Anlaufphase führt meist zu einer beträchtlichen Verringerung der Kippleistung. Es ist darum auch im allgemeinen vorgesehen, den Vorwiderstand nach erfolgtem Anlaufen zu überbrücken. Nur in den Fällen, in denen die verbleibende Leistung ausreicht, kann dies unterlassen werden. Die in der Patentschrift beschriebenen Maßnahmen haben zwar einen positiven Einfluß auch in dem Fall, daß der Synchronmotor einen Umkehrmechanismus der beschriebenen Art antreibt. Diese Lösung bleibt aber problematisch und unsicher, wenn man in einem breiten Spannungsbereich und Toleranzbereich der Lastparameter eine saubere Drehrichtungsumkehr anstrebt.

Es ist bekannt, in Zusammenhang mit einem Einphasensynchronmotor einen Kondensator zu verwenden. So ist in der Betriebsschaltung eines in der DE-PS-1 438 569 beschriebenen Einphasensynchronmotors ein Kondensator vorgesehen. Der Kondensator dient in diesem Fall jedoch lediglich der Dimensionierung des Motors auf maximale Leistung. Nach den zugehörigen Ausführungen des Erfinders in ETZ-A, 87, März 1966, Seiten 171 bis 175, Gl.11, muß dabei erfüllt sein, daß

$$\frac{E}{U} = \frac{1}{2\cos\alpha} \text{ ist, wobei}$$

E = induzierte Spannung
U = angelegte Spannung

$\alpha$ = arctan FIGFIGFIG = Phasenwinkel des Kreises

$\omega$ = Netzkreisfrequenz
C = Vorschaltkondensator
R = Motorwirkwiderstand
L = Spuleninduktivität

Ausdrücklich wird in der DE-PS-1 438 569 auf Werte von tan $\alpha$ zwischen 0 und 5 hingewiesen, also auf induktive Kreise, die auch beim Vorschalten eines Kondensators induktiv bleiben. Dieser dient bei dynamisch nicht auf die volle natürliche Grenzleistung belastbaren Motor-Lastsystemen zur Erhöhung der dynamischen Grenzleistung. Die Verwendung eines Kondensators erfüllt nur dann den Sinn dieses Erfindungsgedankens, wenn der Gesamtphasenwinkel nicht zu stark erniedrigt wird unter den Wert, der der dynamisch zulässigen Winkelfläche $F_{Cu, dyn}$ entspricht. Anderenfalls sinkt die abgebbare Leistung schnell unter den bei der gegebenen zulässigen Verlustleistung möglichen Wert $P_{ab, dyn}$ ab. An negative Phasenwinkel wurde auch hier nicht gedacht.

In der DE-PS-2 612 851 wird neben dem Vorwiderstand u.a. auch ein der Anlaufunterstützung dienender Kondensator oder eine Kombination aus Kondensator und Widerstand erwähnt. Das Ziel dieser Zusatzelemente ist nach wie vor die Verschiebung der subharmonischen Resonanzen bzw. die Abdämpfung der 25 Hz-Störung und angrenzender Pendelgebiete. Die eigentliche Anlaufbewegung mit zugehörigem Abkippen wird in der Patentschrift nicht betrachtet. Wie sich zeigt, wird dies auch nicht verbessert durch das Vorschalten eines der Verschiebung der gestörten Bereiche dienenden Kondensators. Der ganze Zusammenhang legt zudem nur relativ kleine Änderungen der Impedanzen nahe, wie sie nötig sind, um die gestörten und ungestörten Gebiete aus dem Betriebsbereich zu verschieben. Ein Verlassen der induktiven Kreiseigenschaften wurde nicht beabsichtigt und auch nicht nahegelegt.

Durch die Verwendung des erfindungsgemäß dimensionierten Kondensators kann die erzielbare Kippleistung absinken. Nach einer weiteren Ausgestaltung der Erfindung ist deshalb vorgesehen, daß der Kondensator während des Motorlaufes zwischen den Umkehrpunkten abschaltbar ist. Dazu dient ein Schalter, der als mechanischer oder elektronischer Schalter ausgebildet sein, jedoch auch aus einem nicht-linearen, temperaturabhängigen Widerstand bestehen kann.

Zur Strombegrenzung ist nach einer weiteren Ausgestaltung der Erfindung vorgesehen, daß in Reihe mit dem Kondensator ein zusätzlicher Widerstand geschaltet ist.

Es zeigt sich, daß eine weitere Optimierung des Antriebes durch eine Veränderung des Massenträgheitsmomentes möglich ist. In diesem Zusammenhang kann es günstig sein, wenn im Antrieb, beispielsweise auf der Motorwelle, Trägheitsmomente in Form von Scheiben oder Gewichten angeordnet werden.

Die Erfindung wird anhand des in der Zeichnung dargestellten Ausführungsbeispieles näher erläutert. Es zeigen:

Fig. 1 das Aufbauprinzip eines Antriebes für den Preßkegel einer Zitruspresse mit einem als Antrieb dienenden Einphasensynchronmotor mit dauermagnetischem Läufer und ohne Hilfswicklung, wobei der Preßkegel seine Drehrichtung ständig umkehrt,

Fig. 2 eine Draufsicht auf die mechanische Umkehrvorrichtung des Preßkegelantriebes,

Fig. 3 eine Umkehrschaltungsvorrichtung, mit der der Einphasensynchronmotor angetrieben wird, und

Fig. 4 eine abgewandelte Schaltung nach Fig. 3 zum Antreiben des Einphasensynchronmotors.

Ein Einphasensynchronmotor 3 mit dauermagnetischem Läufer und ohne Hilfswicklung ist an ein Einphasenwechselstromnetz 5 anlegbar. In der Speiseleitung 7 des Einphasensynchronmotors ist ein Kondensator 9 angeordnet, der einer sicheren und gewollten Drehrichtungsumkehr des Einphasensynchronmotors dient.

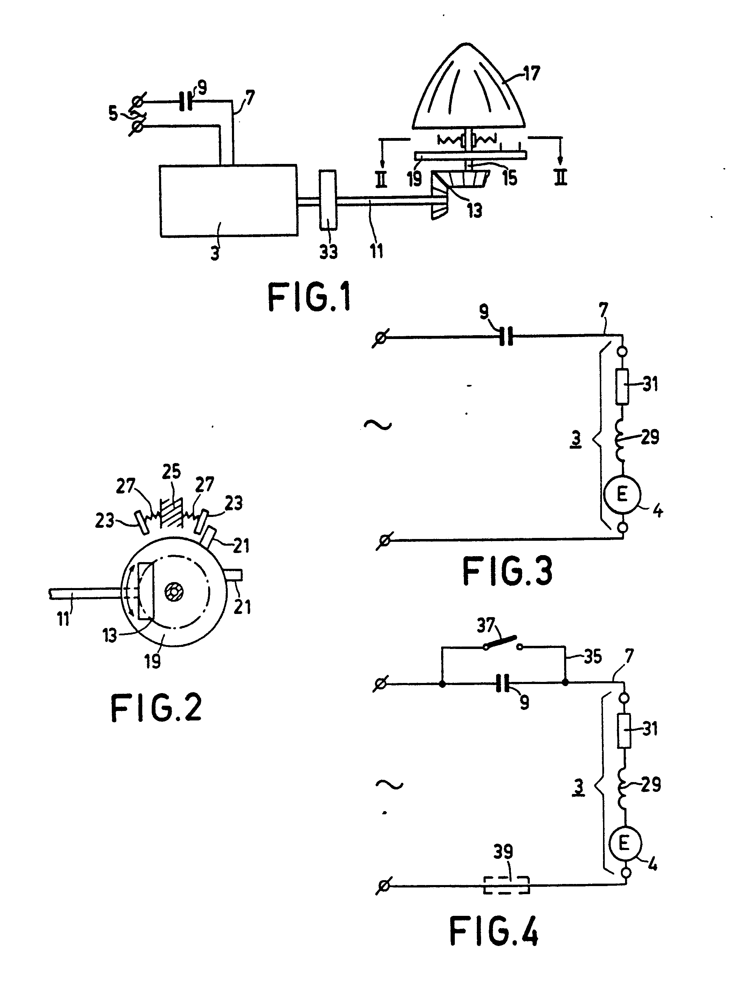

Die Antriebswelle 11 des Einphasensynchronmotors 3 treibt über ein Kegelgetriebe 13 die Welle 15 des Preßkegels 17 einer Zitruspresse an. Auf der Welle 15 ist eine Umkehrscheibe 19 angeordnet, die in Fig. 2 in einer Draufsicht dargestellt ist, die sich aus der Schnittlinie II - II nach Fig. 1 ergibt.

Die Umkehrscheibe 19 ist mit Anschlagnocken 21 versehen, die mit Anschlägen 23 zusammenwirken. Die Anschläge 23 sind federnd ausgebildet und stützen sich zur Kenntlichmachung dieser federnden Abstützung am Gehäuse 25 an Druckfedern 27 ab.

Ein Einphasensynchronmotor mit dauermagnetischem Läufer und ohne Hilfswicklung hat keine eindeutige Anlaufrichtung. Stellt sich ihm ein Bremsmoment in den Weg, das ihn zum Anhalten veranlaßt, dann kippt er um und kann in der Gegendrehrichtung wieder anlaufen. Diese Eigenschaft wird beim Anmeldungsgegenstand für den Antrieb des Preßkegels einer Zitruspresse ausgenutzt, der seine Drehrichtung ständig im gleichbleibenden Rhythmus ändern soll. Aufgrund der Anlaufeigenschaften des Einphasensynchronmotors braucht der Preßkegel bei seinen Drehbewegungen nur angehalten zu werden, um eine Drehrichtungsumkehr des Einphasensynchronmotors zu erzwingen.

Um zu erreichen, daß der Einphasensynchronmotor bei der Drehrichtungsumkehr in den Umkehrpunkten an den Anschlägen 23 glatt und ohne zu stottern anläuft, ist vorgesehen, daß in die Speiseleitung 7 der Kondensator 9 eingeschaltet ist. In Fig. 3 ist die Speiseschaltung des Synchronmotors 3 dargestellt. In der Speiseleitung 7 befindet sich der Kondensator 9. In Reihenschaltung mit dem Kondensator 9 liegt der mit seinem Ersatzschaltbild, bestehend aus dem ohmschen Spulenwiderstand 31, der Spuleninduktivität 29 und der EMK 4, dargestellte Einphasensynchronmotor 3. Der Kondensator 9 ist so dimensioniert, daß der Blindwiderstand des Kondensators bei Netzfrequenz größer ist als der Blindwiderstand der Erregerwicklung. Das bedeutet, daß der Kondensator 9 so bemessen ist, daß der aus Kondensator 9, Spuleninduktivität 29 und Spulenwiderstand 31 bestehende Reihenschwingkreis stark kapazitiv wird. Ein sogenanntes Stottern bei der Umkehr, ein Hapern bzw. Zittern des Preßkegels beim Anlauf sind damit einwandfrei vermieden.

Die Dimensionierung der Schaltung ist so vorgesehen, daß in ihr

$$\tan \frac{\omega L - \frac{1}{\omega C}}{R} < 0 \text{ ist.}$$

Der Betriebsstrom der Erregerwicklung mit Kondensator weist dabei etwa einen Effektivwert auf, der dem Effektivwert des Betriebsstromes ohne vorgeschalteten Kondensator entspricht, da dann die Motorerwärmung gleich ist.

Wird als positive Drehrichtung diejenige Drehrichtung erklärt, in welcher der Läufer durch das magnetische Klebemoment aus der Parallelstellung gezogen werden kann, so muß bei der Auslegung der Anschlagfedern 27 insbesondere bei der Wahl ihrer Federsteifigkeit darauf geachtet werden, daß für das Anlaufen aus der End- und Umkehrstellung in die positive Drehrichtung in der Nähe der Parallelstellung die Summe aus Federmoment und Klebemoment größer ist als das Reibungsmoment. Für das Anlaufen aus der positiven End- oder Umkehrstellung in die negative Drehrichtung ist dann dementsprechend in der Nähe der Parallelstellung die Differenz aus Federmoment und Klebemoment größer als das Reibungsmoment auszulegen.

Die Elastizität der Anschläge 23 ist auch in dynamischer Hinsicht von Vorteil, weil bei normalem Umkehrbetrieb die kinetische Energie des Systems in den Federn gespeichert wird und die Federn somit den Läufer in der Gegenrichtung beschleunigen.

Um die Eigenschaften des Antriebes zu verbessern, ist auf der Welle 11 eine Scheibe 33 angeordnet. Diese Scheibe 33 verändert das Massenträgheitsmoment des Antriebes.

In Fig. 4 ist der Kondensator 9 von einer Parallelleitung 35 überbrückt, in der sich ein Schalter 37 befindet. Dieser Schalter 37 ist immer dann geschlossen, wenn der Synchronmotor 3 zwischen den Umkehrpunkten, die durch die Anschläge 23 vorgegeben werden, umläuft. Auf diese Weise belastet der nur der Umkehrung dienende Kondensator 9 den Antrieb während des Preßkegeldrehens nicht. Der Schalter 37 kann als mechanischer oder elektronischer Schalter ausgebildet sein, jedoch auch aus einem zusätzlichen nicht-linearen, temperaturabhängigen Widerstand bestehen.

In Fig. 4 ist noch ein weiterer zusätzlicher ohmscher Widerstand 39 gestrichelt dargestellt, der in die Speiseleitung 7 eingeschaltet sein kann. Durch das Einschalten eines solchen zusätzlichen ohmschen Widerstandes kann die Stabilität des Anlaufverhaltens verbessert werden.

**Patentansprüche**

1. Umkehrvorrichtung für einen zweipoligen Einphasensynchronmotor (3) ohne Anlaufhilfswicklung mit einem diametral magnetisierten dauermagnetischen Läufer, dessen Welle zur Drehrichtungsumkehr gegen Anschläge (23) aufläuft, und mit einem in Reihe mit der Ständererregerwicklung (29, 31) geschalteten Kondensator (9), dadurch gekennzeichnet, daß der Blindwiderstand des Kondensators (9) bei Netzfrequenz größer ist als der Blindwiderstand (5) der Erregerwicklung, womit die Kondensatorwerte der Dimensionierungsvorschrift:

$$\frac{\omega L - \frac{1}{\omega C}}{R} < 0,$$

folgen, derart, daß der Betriebsstrom der Erregerwicklung mit Kondensator (9) etwa den gleichen Effektivwert aufweist, der dem Effektivwert des Betriebsstromes ohne vorgeschalteten Kondensator entspricht.

2. Umkehrvorrichtung nach Anspruch 1, dadurch gekennzeichnet, daß der Kondensator (9) während des Motorlaufes zwischen den Umkehrpunkten abschaltbar ist.

3. Umkehrvorrichtung nach Anspruch 1, dadurch gekennzeichnet, daß in Reihe mit dem Kondensator ein zusätzlicher Widerstand (39) geschaltet ist.

4. Umkehrvorrichtung nach einem oder mehreren der Ansprüche 1 bis 3, dadurch gekennzeichnet, daß auf der Motorwelle ein zusätzliches Trägheitsmoment (33) angeordnet ist.

5. Umkehrvorrichtung nach einem oder mehreren der Ansprüche 1 bis 4, dadurch gekennzeichnet, daß im Antrieb eine Umkehrscheibe (19) vorgesehen ist, die mit Anschlagnocken (21) besetzt ist.

6. Umkehrvorrichtung nach Anspruch 5, dadurch gekennzeichnet, daß die Umkehrscheibe (19) unmittelbar auf der Pressenwelle (15) angeordnet ist.

7. Umkehrvorrichtung nach Anspruch 1, dadurch gekennzeichnet, daß die Umkehranschläge (23) elastisch ausgebildet sind.

## Claims

1. A reversing device for a two-pole single-phase synchronous motor (3) without starting auxiliary coil, which motor comprises a diametrically magnetized permanent-magnet rotor, whose shaft runs against stops for reversing the direction of rotation, and a capacitor arranged in series with the stator exciter coil, characterized in that the reactance of the capacitor (9) at the mains frequency is higher than the reactance (5) of the exciter coil, so that the capacitor values comply with the dimensioning rule:

$$\frac{\omega L - \dfrac{1}{\omega C}}{R} < 0$$

in such a way that the operating current for the exciter coil with capacitor (9) has substantially the same effective value as the operating current without series capacitor.

2. A reversing device as claimed in Claim 1, characterized in that the capacitor (9) is disconnectable during motor operation between the points of reversal.

3. A reversing device as claimed in Claim 1, characterized in that an additional resistor (39) is arranged in series with the capacitor.

4. A reversing device as claimed in any one or several of the Claims 1 to 3, characterized in that an additional inertial element (33) is arranged on the motor shaft.

5. A reversing device as claimed in any one or several of the Claims 1 to 4, characterized in that the drive mechanism comprises a reversing disc (19) equipped with stop cams (21).

6. A reversing device as claimed in Claim 5, characterized in that the reversing disc (19) is arranged directly on the pressing-cone shaft (15).

7. A reversing device as claimed in Claim 1, characterized in that the reversing stops (23) are elastic.

## Revendications

1. Dispositif de renversement d'un moteur synchrone monophasé bipolaire (3) sans enroulement auxiliaire, moteur comportant, d'une part, un rotor à aimantation permanente diamétrale dont l'arbre bute contre des butées (23) pour le renversement du sens de rotation et, d'autre part, un condensateur (9) connecté en série avec l'enroulement d'excitation (29, 31) du stator, caractérisé en ce que la réactance du condensateur (9) à la fréquence du réseau est supérieure à la réactance (5) de l'enroulement d'excitation, de sorte que les valeurs du condensateur répondent à l'exigence de dimensionnement:

$$\frac{\omega L - \dfrac{1}{\omega C}}{R} < 0,$$

et cela de telle manière que le courant de régime de l'enroulement d'excitation avec condensateur (9) présente environ la même valeur effective que le courant de régime sans condensateur en série.

2. Dispositif de renversement selon la revendication 1, caractérisé en ce que le condensateur (9) peut être déconnecté lors de la rotation du moteur entre les points de renversement.

3. Dispositif de renversement selon la revendication 1, caractérisé en ce qu'une résistance supplémentaire (39) est connectée en série avec le condensateur.

4. Dispositif de renversement selon une ou plusieurs des revendications 1 à 3, caractérisé en ce qu'un élément inertiel supplémentaire (33) est disposé sur l'arbre du moteur.

5. Dispositif de renversement selon une ou plusieurs des revendications 1 à 4, caractérisé en ce qu'il est prévu dans le mécanisme d'entraînement un disque de renversement (19) muni de cames de butée (21).

6. Dispositif de renversement selon la revendication 5, caractérisé en ce que le disque de renversement (19) est disposé directement sur l'arbre (15) de la toupie.

7. Dispositif de renversement selon la revendication 1, caractérisé en ce que les butées de renversement (23) sont élastiques.

FIG.1

FIG.2

FIG.3

FIG.4